# EUROPÄISCHE PATENTSCHRIFT

(11) **EP 2 401 079 B1**
(45) Veröffentlichungstag und Bekanntmachung des Hinweises auf die Patenterteilung: **02.01.2013**
(21) Anmeldenummer: 10705996.6
(22) Anmeldetag: 25.02.2010
(51) Int. Cl.: B01J 35/10, C08K 9/02, C09C 1/36

(54) **SELBSTREINIGENDE POLYMERE**
SELF-CLEANING POLYMERS
POLYMÈRES AUTONETTOYANTS

(30) Priorität: 26.02.2009 EP 09153731
(43) Veröffentlichungstag der Anmeldung: 04.01.2012
(73) Patentinhaber: Styrolution GmbH, 60325 Frankfurt (DE)
(72) Erfinder: BRAUN, Leonie Felicitas, 68259 Mannheim (DE); SEEBER, Alexandra, 67245 Lambsheim (DE); KLINGLER, Dirk, 68163 Mannheim (DE)
(74) Vertreter: Jacobi, Markus Alexander
(86) Internationale Anmeldenummer: PCT/EP2010/052398
(87) Internationale Veröffentlichungsnummer: WO 2010/097432

(56) Entgegenhaltungen:
- EP-A1- 1 955 767
- US-A1- 2003 181 329
- DATABASE WPI Week 200059 Thomson Scientific, London, GB; AN 2000-614493 XP002586132 -& JP 2000 204194 A (OTSUKA KAGAKU YAKUHIN KK) 25. Juli 2000 (2000-07-25) in der Anmeldung erwähnt

## Beschreibung

Die vorliegende Erfindung betrifft eine Mischung, enthaltend wenigstens ein thermoplastisches Polymer als Komponente (A) und wenigstens ein photokatalytisch aktives Teilchen, umfassend einen nicht-porösen Kern enthaltend wenigstens ein Metall- oder Halbmetalloxid mit einem Durchmesser von 0,1 nm bis 1 µm und wenigstens eine den Kern zumindest teilweise umgebende poröse Hülle enthaltend wenigstens ein weiteres Metall- oder Halbmetalloxid mit einer mittleren Schichtdicke von 0,1 bis 10 nm als Komponente (B), ein Verfahren zur Herstellung dieser Mischung und die Verwendung einer solchen Mischung.

Mischungen enthaltend Polymere und photokatalytisch aktive Füllstoffe sind aus dem Stand der Technik bereits bekannt.

EP 1 955 767 A1 offenbart eine Mischung enthaltend Photokatalysatoren und organische Polymere, beispielsweise Polyacetale, Polyethylen, Polypropylen, Polystyrol, Polyvinylchlorid, Nylon-artige Polymere, Polycarbonate etc. Als Photokatalysatoren werden bevorzugt Titandioxidpartikel verwendet, die eine Umhüllung aus nicht-porösem Siliziumdioxid aufweisen.

JP 2007-277433 offenbart ein polymeres Material enthaltend wenigstens ein thermoplastisches Polymer und photokatalytisch aktives Material, welches auf KohlenstoffPulver als Trägermaterial aufgebracht ist. Das photokatalytisch aktive Material gemäß diesem Dokument ist Titandioxid in der Anatase-Modifikation.

JP 2000-017096 offenbart geschäumte Folien aus thermoplastischen Harzen, welche Titandioxid als antibakterielle Beschichtung aufweisen. Auf der Oberfläche des Titandioxids können Silane als Oberflächenmodifizierung angebracht sein.

JP 2000-204194 offenbart ein Verfahren zur Herstellung von Polymerzusammensetzungen, die Titandioxid als Photokatalysator enthalten. Das Titandioxid ist beispielsweise mit Siliziumdioxid beschichtet. Das Verhältnis von Polymer zu Titandioxid beträgt 97 zu 3 bis 20 zu 80.

JP 09/225321 A offenbart einen photokatalytisch aktiven Körper bestehend aus Titandioxid in der Anatase-Modifikation. Das in dieser Zusammensetzung verwendete Titandioxid liegt zwischen zwei porösen Schichten einer weiteren anorganischen Verbindung, beispielsweise Siliziumdioxid, vor.

JP 2005-097608 A offenbart einen Polyolefin-Film, der Photokatalysator-Partikel enthält, wobei die Photokatalysator-Partikel gemischte kristalline Oxide enthaltend Titandioxid und Siliziumdioxid sind. Dieses Dokument offenbart keine Kern-Schale-Photokatalysatoren bzw. keine Verwendung in thermoplastischen Polymeren.

US 2003/0181329 A1 offenbart hochaktive Photokatalysator-Partikel, in denen ein photoaktiver Kern mit einer nicht photoaktiven Hülle umgeben ist, ein Verfahren zu ihrer Herstellung und ihre Verwendung. US 2003/0181329 A1 offenbart auch eine Zusammensetzung enthaltend ein organisches Polymer und den genannten Photokatalysator. Titandioxid ist ein bevorzugtes Material für den Kern des Photokatalysators und unter anderem sind Silicium-Verbindungen geeignete Verbindungen, welche keine photokatalytische Aktivität aufweisen. Dieses Dokument offenbart nicht, dass die Basis des Photokatalysators nicht porös, und die diese Basis umgebende Hülle porös sein soll.

Aufgabe der vorliegenden Erfindung ist es, Mischungen enthaltend thermoplastische Polymere bereitzustellen, welche sich dadurch auszeichnen, dass beispielsweise an den Polymeren anhaftende Verunreinigungen durch die in den Mischungen vorliegenden photokatalytisch aktiven Substanzen abgebaut werden können, ohne dass das polymere Material an sich durch die Photokatalysatoren abgebaut wird. Des Weiteren ist es eine Aufgabe der vorliegenden Anmeldung, dass durch das Vorhandensein der speziellen Photokatalysatoren die mechanischen Eigenschaften der thermoplastischen Polymere nicht leiden. Des Weiteren sollen die photokatalytischen Eigenschaften der Mischungen durch die Eigenschaften der eingesetzten Photokatalysatoren gezielt und fein einstellbar sein.

Diese Aufgaben werden gelöst durch die erfindungsgemäße Mischung enthaltend
(A) wenigstens ein thermoplastisches Polymer als Komponente (A) und
(B) wenigstens ein photokatalytisch aktives Teilchen, umfassend einen nicht porösen Kern enthaltend wenigstens ein Metall- oder Halbmetalloxid von Metallen oder Halbmetallen ausgewählt aus der Gruppe bestehend aus V, Ti, Zr, Ce, Mo, W, Bi, Zn, Mn, Si, Ba, Au, Ag, Pd, Pt, Ru, Rh, La und Mischungen davon, mit einem Durchmesser von 0,1 nm bis 1 µm und wenigstens eine den Kern zumindest teilweise umgebende poröse Hülle enthaltend wenigstens ein weiteres Metall- oder Halbmetalloxid ausgewählt aus SiO₂, ZnO, CeO₂, TiO₂, SnO oder SnO₂ oder Mischungen davon, mit einer mittleren Schichtdicke von 0,1 bis 10 nm als Komponente (B), wobei das Verhältnis des Metalls oder Halbmetalls in der Hülle in Atomprozent zu Anteil des Metalls oder Halbmetalls im Kern, im Atomprozent 2 bis 80 beträgt, und Komponente (A) ausgewählt ist aus der Gruppe bestehend aus Polyoxymethylenhomo- oder -copolymerisaten, Polycarbonaten, Polyestern, Polyolefinen, Poly(meth)acrylaten, Polyamiden, vinylaromatischen Polymeren, Polyarylenethern und Mischungen davon.

Die erfindungsgemäße Mischung wird im Folgenden detailliert beschrieben.

### Komponente (A):

In der erfindungsgemäßen Mischung liegt als Komponente (A) wenigstens ein thermoplastisches Polymer aus der genannten Gruppe vor. Verfahren zur Herstellung solcher thermoplastischer Polymere sind dem Fachmann an sich bekannt.

In der erfindungsgemäßen Mischung ist Komponente (A) ausgewählt aus der Gruppe bestehend aus Polyoxymethylenhomo- oder -copolymerisaten, Polycarbonaten, Polyestern, Polyolefinen, Poly(meth)acrylaten, Polyamiden, vinylaromatischen Polymeren, Polyarylenethern und Mischungen davon. Diese thermoplastischen Polymere werden im Folgenden erläutert.

### Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf. Die Homopolymeren werden im Allgemeinen durch Polymerisation von Formaldehyd oder Trioxan hergestellt, vorzugsweise in der Gegenwart von geeigneten Katalysatoren.

Bevorzugt werden Polyoxymethylencopolymere, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 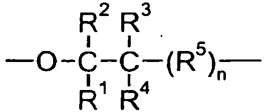 enthalten, wobei R¹ bis R⁴ unabhängig voneinander ein Wasserstoffatom, eine C₁- bis C₄- Alkylgruppe oder eine halogensubstituierte Alkylgruppe mit 1 bis 4 C-Atomen und R⁵ eine -CH₂-, -CH₂O-, eine C₁- bis C₄- Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 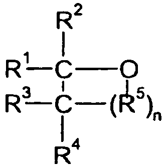 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3- Dioxolan und 1,3-Dioxepan als cyclische Ether genannt sowie lineare Oligo- oder Polyformale wie Polydioxolan oder Polydioxepan als Comonomere genannt.

Weitere als Komponente (A) geeignete thermoplastische Polymere sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 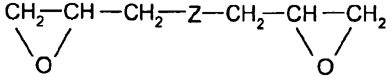 und/oder 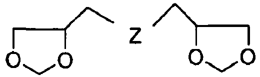 wobei Z eine chemische Bindung, -O-, -ORO- (R= C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben.

Die bevorzugten Polyoxymethylencopolymere haben Schmelzpunkte von mindestens 150 °C und Molekulargewichte (Mw) im Bereich von 5000 bis 200000, vorzugsweise von 7000 bis 150000 g/mol.

Endgruppenstabilisierte Polyoxymethylenpolymerisate, die an den Kettenenden C-C-Bindungen aufweisen, werden besonders bevorzugt.

### Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im Allgemeinen - wie auch im Folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4- Dihydroxydiphenyl sowie Mischungen der vorgenannten Dihydroxyverbindungen. Besonders bevorzugte Polycarbonate sind solche auf der Basis von Bisphenol A oder Bisphenol A zusammen mit bis zu 30 mol-% der vorstehend genannten aromatischen Dihydroxyverbindungen.

Die relative Viskosität dieser Polycarbonate liegt im Allgemeinen im Bereich von 1,1 bis 1,5, insbesondere 1,28 bis 1,4 (gemessen bei 23 °C in einer 0,5 gew.-%igen Lösung in Dichlormethan).

Geeignete Polyester sind ebenfalls an sich bekannt und in der Literatur beschrieben. Sie enthalten bevorzugt einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, iso- bzw. n-Propyl und n-, iso- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, iso- bzw. n-Propyl und n-, iso- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt, wobei auch Polyethylenterephthalat als Rezyklat bis zu 50 Gew.-%, bezogen auf A), eingesetzt werden kann.

Die Viskositätszahl der Polyester liegt im Allgemeinen im Bereich von 60 bis 220, vorzugsweise von 100 bis 150, gemessen in einer 0,5 gew.- %igen Lösung in einem Phenol/o-Dichlorbenzolgemisch (Gew.-Verh. 1:1) bei 25 °C.

Derartige Polyester können beispielsweise nach dem Verfahren der DE-A 44 01 055 hergestellt werden. Der Carboxylendgruppengehalt wird üblicherweise durch Titrationsverfahren (z. B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 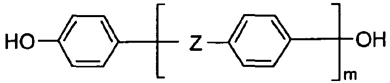 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff oder Schwefelatom oder eine chemische Bindung darstellt und in der m den Wert 0 bis 2 hat. Die Dihydroxyverbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)suffoxid, α,α'-Di-(hydroxyphenyl)-dialkylbenzol, Di-(hydroxyphenyl)sulfon, Di-(hydroxybenzoyl)benzol Resorcin und Hydrochinon sowie deren kernalkylierte oder kernhalogenierte Derivate genannt.

Von diesen werden 4,4'-Dihydroxydiphenyl, 2,4-Di-(4'-hydroxyphenyl)-2-methylbutan α,α'-Di-(4-hydroxyphenyl)-p-diisopropylbenzol, 2,2-Di(3'-methyl-4'-hydroxyphenyl)propan und 2,2-Di-(3'-chlor-4'-hydroxyphenyl)propan, sowie insbesondere 2,2-Di-(4'-hydroxyphenyl)propan 2,2-Di(3',5'-dichlordihydroxyphenyl)propan, 1,1-Di-(4'-hydroxyphenyl)cyclohexan, 3,4'-Dihydroxybenzophenon, 4,4'-Dihydroxydiphenylsulfon und 2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel^{®}(DuPont).

Als bevorzugte Dicarbonsäuren sind Naphthalindicarbonsäure, Terephthalsäure und Isophthalsäure oder deren Mischungen zu nennen. Bis zu 10 mol% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4- Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im Allgemeinen im Bereich von 60 bis 200 ml/g, gemessen in einer 0,5 gew.-%igen Lösung in einem Phenol/o-Dichlorbenzolgemisch (Gew.-Verh. 1:1) bei 23 °C.

### Polyolefine

Hier sind ganz allgemein Polyethylen und Polypropylen sowie Copolymerisate auf Basis von Ethylen oder Propylen, ggf. auch mit höheren alpha-Olefinen zu nennen. Entsprechende Produkte sind unter den Handelsnamen Lupolen^{®} bzw. Hostalen^{®}/Moplen^{®} von BASELL erhältlich.

### Poly(meth)acrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter der Bezeichnung Plexiglas^{®} erhältlich sind.

### Polyamide

Geeignete Polyamide weisen im allgemeinen eine Viskositätszahl von 90 bis 350, vorzugsweise 1 10 bis 240 ml/g auf bestimmt in einer 0,5 gew.-%igen Lösung in 96 gew.-%iger Schwefelsäure bei 25 °C auf gemäß ISO 307.

Halbkristalline oder amorphe Harze mit einem Molekulargewicht (Mw) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)methan, 2,2-Di-(4-aminophenyl)propan oder 2,2-Di-(4-aminocyclohexyl)- propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Selbstverständlich können auch Mischungen (Blends) derartiger Polymere eingesetzt werden.

### Vinylaromatische Polymere

Das Molekulargewicht (Mw) dieser an sich bekannten und im Handel erhältlichen vinylaromatischen Polymeren liegt im Allgemeinen im Bereich von 1.500 bis 2.000.000, vorzugsweise im Bereich von 70.000 bis 1.000.000 g/mol.

Als Beispiele können hier vinylaromatische Polymere aus Styrol, Chlorstyrol, alpha-Methylstyrol und p-Methylstyrol genannt werden, die gegebenenfalls auch Comonomere wie (Meth)acrylnitril oder (Meth)acrylsäureester enthalten können. Erfindungsgemäß besonders bevorzugt als Komponente (A) verwendete vinylaromatische Polymere sind Styrol-Acrylonitril-Copolymere, so genannte SAN-Copolymere.

In einer besonders bevorzugten Ausführungsform enthalten die erfindungsgemäß eingesetzten SAN-Copolymere 50 bis 90 Gew.-%, vorzugsweise 55 bis 90 Gew.-% und insbesondere 60 bis 85 Gew.-% Styrol und/oder substituierte Styrolen der folgenden Formel 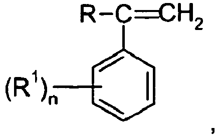 wobei R Alkylreste mit 1 bis 8 C-Atomen, Wasserstoffatome oder Halogenatome und R¹ Alkylreste mit 1 bis 8 C-Atomen oder Halogenatome darstellen und n den Wert 0, 1, 2 oder 3 hat,
und
10 bis 50 Gew.-%, vorzugsweise 10 bis 45 Gew.-% und insbesondere 15 bis 40 Gew.-% Acrylnitril und/oder Methacrylnitril.

Die genannten SAN-Copolymere können z. B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000 g/mol, insbesondere von 100.000 bis 250.000 g/mol.

Die Viskositätszahl der SAN-Copolymere, gemessen gemäß DIN 53 727 als 0,5 gew.-%ige Lösung in Dimethylformamid bei 23 °C liegt im Allgemeinen im Bereich von 40 bis 100, vorzugsweise 50 bis 80 ml/g.

In einer besonders bevorzugten Ausführungsform liegen die genannten SAN-Copolymere in Kombination mit wenigstens einer kautschukelastischen Komponente vor. Geeignete kautschukelastische Polymere, d. h. Homo- oder Copolymere sind beispielsweise aufgebaut aus einer Weich- oder Kautschukphase aus einem Pfropfpolymerisat aus
- 50 bis 90 Gew.-%, bevorzugt 55 bis 75 Gew.-%, einer Pfropfgrundlage auf Basis von 95 bis 100 Gew.-% eines C₂-C₁₀-Alkylacrylats und 0 bis 5 Gew.-% eines difunktionellen Monomeren mit zwei olefinischen, nicht konjugierten Doppelbindungen, und
- 10 bis 50 Gew.-%, bevorzugt 25 bis 45 Gew.-%, einer Pfropfauflage aus 40 bis 90 Gew.-%, bevorzugt 60 bis 80 Gew.-%, Styrol oder substituierten Styrolen der oben abgebildeten allgemeinen Formel oder deren Mischungen, und 10 bis 50 Gew.-%, bevorzugt 15 bis 40 Gew.-%, Acrylnitril, Methacrylnitril, Acrylsäureestern oder Methacrylsäureestern oder deren Mischungen.
   In einer ganz besonders bevorzugten Ausführungsform enthält das wenigstens eine kautschukelastische Polymer 50 bis 90 Gew.-%, bevorzugt 55 bis 75 Gew.-%, einer Pfropfgrundlage auf Basis eines Polyacrylsäurebutylesters und
   10 bis 50 Gew.-%, bevorzugt 25 bis 45 Gew.-%, einer Pfropfauflage aus 40 bis 90 Gew.-%, bevorzugt 60 bis 80 Gew.-%, Styrol und 10 bis 50 Gew.-%, bevorzugt 15 bis 40 Gew.-%, Acrylnitril, Methacrylnitril, Acrylsäureestern oder Methacrylsäureestern oder deren Mischungen.

Für die Herstellung der Pfropfgrundlage werden als Hauptmonomere bevorzugt Ester der Acrylsäure mit 2 bis 10 C-Atomen, insbesondere 4 bis 8 C-Atomen eingesetzt. Als besonders bevorzugte Monomere seien hier tert-, iso- und n-Butylacrylat sowie 2-Ethylhexylacrylat genannt, von denen die beiden letztgenannten besonders bevorzugt werden. Neben diesen Estern der Acrylsäure werden gegebenenfalls 0 bis 5, insbesondere 1 bis 4 Gew.-%, bezogen auf das Gesamtgewicht der beiden Monomere, eines polyfunktionellen Monomeren mit mindestens zwei olefinischen, nicht konjugierten Doppelbindungen eingesetzt. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage A sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen. Die genauen Polymerisationsbedingungen, insbesondere Art, Dosierung und Menge des Emulgators werden vorzugsweise so gewählt, dass der Latex des Acrylsäureesters, der zumindest teilweise vernetzt ist, eine mittlere Teilchengröße (Gewichtsmittel) im Bereich von etwa 20 bis 700, insbesondere von 50 bis 600 nm aufweist.

Der Anteil der Pfropfgrundlage am Pfropfpolymerisat beträgt 50 bis 90 Gew.-%, bevorzugt 55 bis 75 Gew.-%, jeweils bezogen auf das Gesamtgewicht aus Pfropfgrundlage und Pfropfschale.

Auf die Pfropfgrundlage ist eine Pfropfauflage aufgepfropft, die durch Copolymerisation von 90 bis 50 Gew.-%, bevorzugt 85 bis 60 Gew.-%, Styrol oder substituierten Styrolen der oben abgebildeten allgemeinen Formel oder deren Mischungen, und 10 bis 50 Gew.-%, bevorzugt 15 bis 40 Gew.-%, Acrylnitril, Methacrylnitril, Acrylsäureestern oder Methacrylsäureestern oder deren Mischungen erhalten werden kann.

Beispiele für substituierte Styrole sind alpha-Methylstyrol, p-Methylstyrol, p-Chlorstyrol und p-Chlor-alpha-Methylstyrol, wovon Styrol und alpha-Methylstyrol bevorzugt werden.

Die Pfropfauflage kann in einem oder in mehreren, z. B. zwei oder drei, Verfahrensschritten hergestellt werden, die Bruttozusammensetzung bleibt davon unberührt. Vorzugsweise wird die Pfropfauflage in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestem.

In einer bevorzugten Ausführungsform werden zwei Pfropfcopolymerisate eingesetzt, die die gleichen Monomere in den gleichen Mengen aufweisen, die sich jedoch durch die Teilchengrößen der jeweiligen Pfropfgrundlagen unterscheiden. In einer bevorzugten Ausführungsform wird eine Mischung entsprechender Pfropfcopolymerisate eingesetzt, wobei ein erstes Pfropfcopolymerisat mit einer Teilchengröße der Pfropfgrundlage von 20 bis 200 nm, bevorzugt 40 bis 120 nm, besonders bevorzugt 70 bis 110 nm, und ein zweites Pfropfcopolymerisat mit einer Teilchengröße der Pfropfgrundlage von 200 bis 800 nm, bevorzugt 300 bis 650 nm, besonders bevorzugt 400 bis 600 nm, verwendet wird.

Das Gewichtsverhältnis von erfindungsgemäß bevorzugt vorliegendem Pfropfcopolymerisat zu SAN-Copolymer liegt im Bereich von 1 : 2,5 bis 2,5 : 1, vorzugsweise von 1 : 2 bis 2 : 1 und insbesondere von 1 : 1,5 bis 1,5 : 1.

### Polyarylenether

Unter Polyarylenethem sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁-bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Diese können neben -O-, z.B. über -S-, -SO-, -SO₂-, -CO-, -N=N-, -COO-, einen Alkylenrest oder eine chemische Bindung miteinander verknüpft sein. In den Polyarylenethem können die Arylengruppen auch über unterschiedliche Gruppen miteinander verknüpft sein.

Zu den bevorzugten Polyarylenethem zählen solche mit wiederkehrenden Einheiten der folgenden allgemeinen Formel (I)

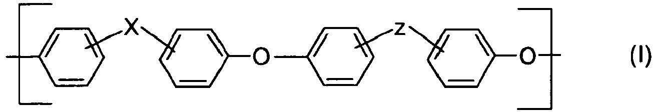

Ebenso können deren kernsubstituierten Derivate verwendet werden. Als Substituenten kommen vorzugsweise C₁-C₆-Alkyl, wie Methyl, Ethyl oder t-Butyl, C₁-C₆-Alkoxy, wie Methoxy oder Ethoxy, Aryl, insbesondere Phenyl, Chlor oder Fluor in Betracht. Die Variable X kann -SO₂-, -SO-, -S-, -O-, CO, -N=N-, -RC=CR^{a}-, -CR^{b}R^{c}- oder eine chemische Bindung sein. Die Variable Z kann für -SO₂-, -SO-, -CO-, -O-, -N=N- oder - RC=CR^{a} stehen. Hierbei stellen R und R^{a} jeweils Wasserstoff, C₁-C₆-Alkyl, z.B. Methyl, n-Propyl oder n-Hexyl, C₁-C₆-Alkoxy, darunter Methoxy, Ethoxy oder Butoxy oder Aryl, insbesondere Phenyl dar. Die Reste R^{b} und R^{c} können jeweils Wasserstoff oder eine C₁- bis C₆-Alkylgruppe, insbesondere Methyl, darstellen. Sie können aber auch zu einem C₄- bis C₁₀-Cycloalkylring, bevorzugt Cyclopentyl- oder Cyclohexylring, miteinander verknüpft sein, der seinerseits mit einer oder mehreren Alkylgruppen, vorzugsweise Methyl substituiert sein kann. Daneben können R^{b} und R^{c} auch eine C₁- bis C₆-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Im Folgenden sind einige der besonders bevorzugten wiederkehrenden Einheiten I aufgeführt:

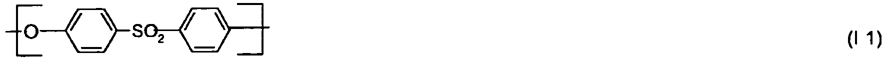

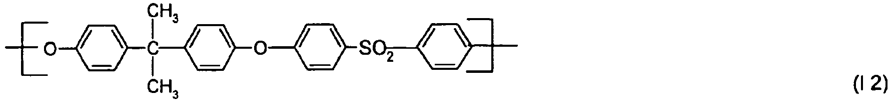

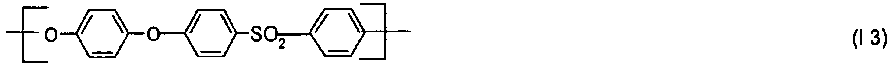

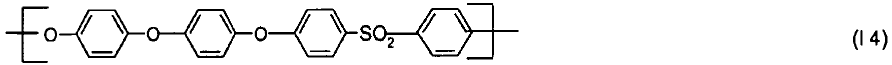

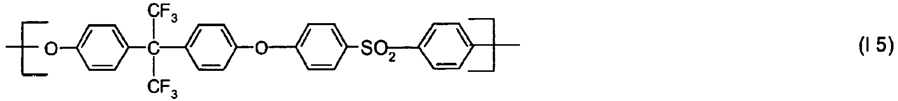

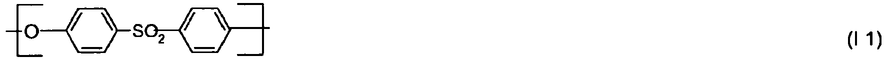

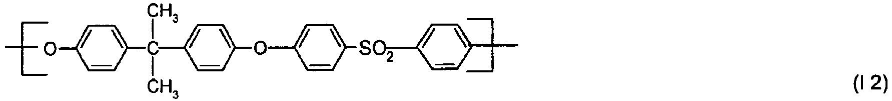

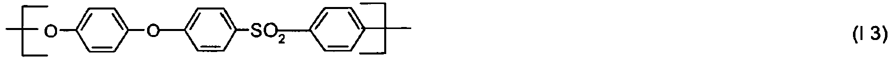

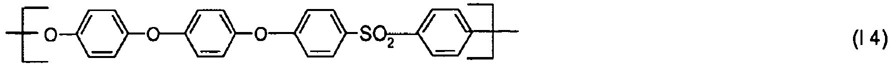

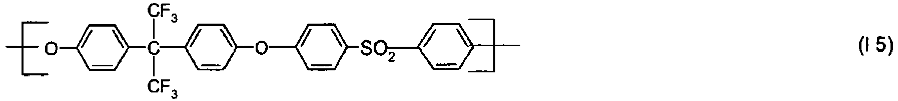

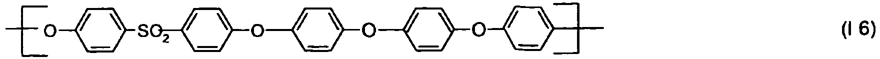

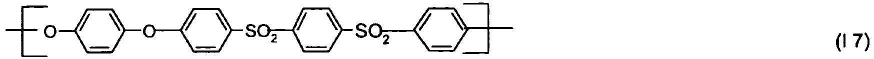

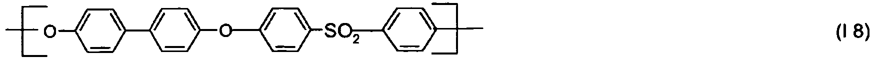

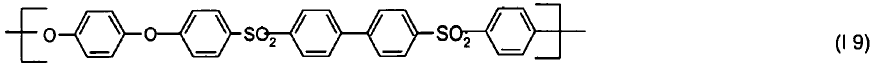

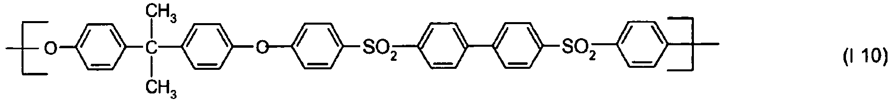

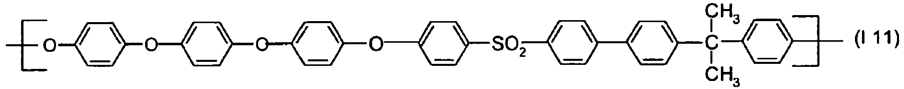

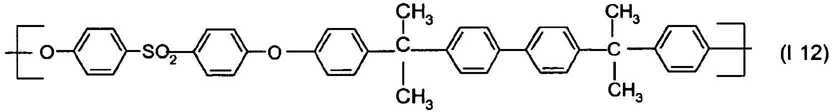

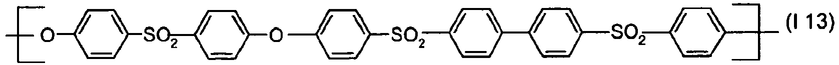

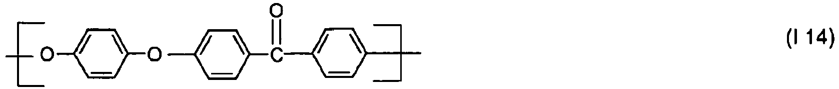

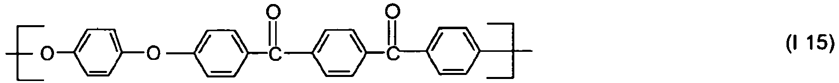

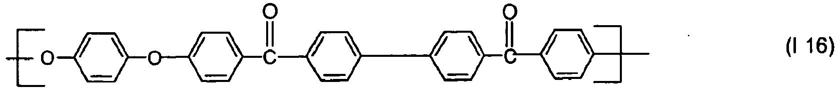

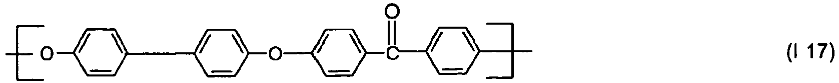

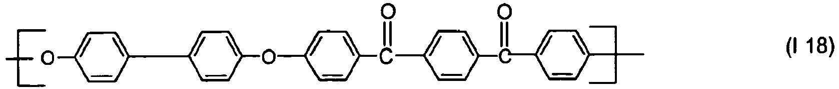

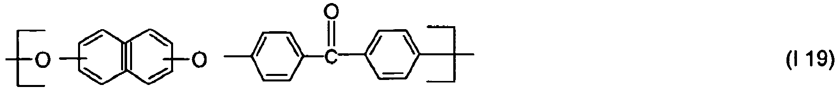

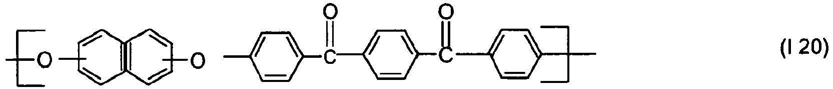

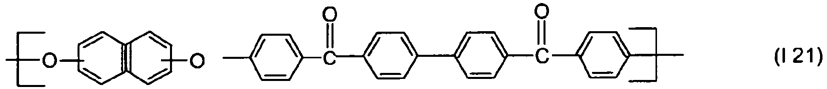

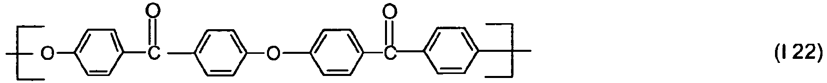

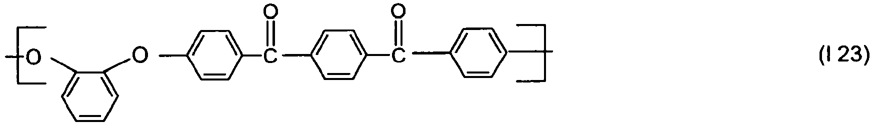

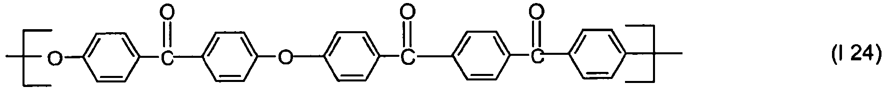

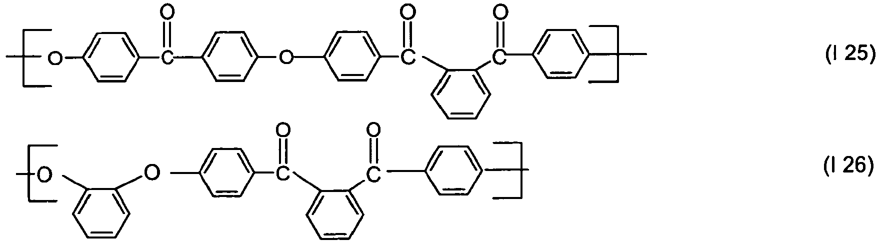

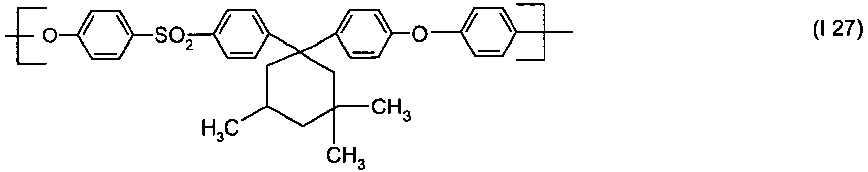

Ganz besonders werden Polyarylenether bevorzugt, die als wiederkehrende Einheiten (I 1), (I 2); (I 24) oder (I 25) enthalten. Dazu zählen beispielsweise Polyarylenethersulfone mit 0 bis 100 mol%, bevorzugt 5 bis 95 mol-% Struktureinheiten (I 1) und 0 bis 100 mol%, bevorzugt 5 bis 95 mol% Struktureinheiten (I 2) enthalten.

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke bzw. der Pfropfarme in den Copolymeren liegen in der Regel im Bereich von 1000 bis 30000 g/mol. Die Blöcke unterschiedlicher Struktur können alternierend oder statistisch angeordnet sein. Der Gewichtsanteil der Polyarylenethersegmente in den Co- oder Blockcopolymere beträgt im Allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersegmenten mit bis zu 90 Gew.-%. Besonders bevorzugt werden Co- oder Blockcopolymere mit 20 bis 80 Gew.-% Polyarylenethersegmenten eingesetzt.

Im Allgemeinen weisen die Polyarylenether mittlere Molekulargewichte Mn (Zahlenmittel) im Bereich von 10 000 bis 60 000 g/mol und Viskositätszahlen von 30 bis 150 ml/g auf. Die Viskositätszahlen werden je nach Löslichkeit der Polyarylenether entweder in 1 gew.-%iger N-Methylpyrrolidon-Lösung, in Mischungen aus Phenol und o-Dichlorbenzol oder in 96 %iger Schwefelsäure bei jeweils 20 °C bzw. 25 °C gemessen.

Die Polyarylenether sind an sich bekannt oder können nach an sich bekannten Methoden hergestellt werden.

So lassen sich beispielsweise Polyphenylenether durch oxidative Kupplung von Phenolen herstellen. Polyarylenethersulfone oder -ketone entstehen z. B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden.

Bevorzugt werden die Monomeren in der Schmelze oder in einem inerten hochsiedenden Lösungsmittel polymerisiert. Zu diesen zählen Chlorbenzol, Dichlorbenzol, Xylol und Trichlorbenzol. Daneben kommen Sulfone oder Sulfoxide, darunter vor allem Dimethylsulfon, Diethylsulfon, 1,1-Dioxotetrahydrothiophen (Sulfolan) oder Diphenylsulfon, Dimethylsulfoxid oder Diethylsulfoxid, bevorzugt Dimethylsulfoxid, in Betracht. Zu den bevorzugten Lösungsmitteln zählen auch N-Alkylpyrrolidone, insbesondere N-Methylpyrrolidon. Weiterhin können N-substituierte Säureamide, beispielsweise N,N-Dimethylformamid oder N,N-Dimethylacetamid eingesetzt werden. Es ist auch möglich, Mischungen unterschiedlicher Lösungsmittel zu verwenden.

Bevorzugte Verfahrensbedingungen zur Synthese von Polyarylenethersulfonen oder -ketonen sind beispielsweise in der EP-A-1 13 1 12 und 135 130 beschrieben.

Die bevorzugten Polyarylenether weisen in der Regel einen Schmelzpunkt von mindestens 320 °C (Polyarylenethersulfone) bzw. von mindestens 370 °C (Polyarylenetherketone) auf.

Erfindungsgemäß kann die Mischung Polyarylenethersulfone oder -ketone enthalten, die durch Umsetzen eines Polyarylenethersulfons oder -ketons mit einer reaktiven Verbindung erhältlich sind. Die reaktiven Verbindungen enthalten neben einer C-C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactamen oder Halogenbenzylgruppe.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁-C₁₀-Alkanolen, die Mono- oder Diamide dieser Säuren wie N-Phenylmaleinimid, Maleinsäurehydrazid. Bevorzugt werden alpha, beta-ungesättigte Dicarbonsäuren bzw. deren Anhydride, Di-Ester und Mono-Ester der nachstehenden allgemeinen Struktur IV und V verwendet. 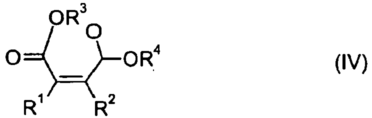 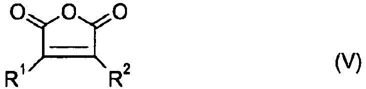 wobei R¹, R², R³ und R⁴ unabhängig voneinander Wasserstoff sowie C₁-C₁₈-AlkylGruppen sein können. Besonders geeignete Verbindungen sind Maleinsäureanhydrid, Fumarsäure und Itaconsäure.

Die Polymere und die reaktive Verbindung können z. B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im Allgemeinen ein üblicher Radikalinitiator eingesetzt. Die Umsetzung wird im Allgemeinen bei 75 bis 150 °C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können beispielsweise auch bei einer Temperatur von 270 - 350 °C in der Schmelze in einem kontinuierlich oder absatzweise arbeitenden Mischaggregat (z.B. Ein- oder Zweiwellenextruder, Kneter) umgesetzt werden. Die reaktive Verbindung wird dabei vorzugsweise in flüssiger Form, insbesondere innerhalb der Knetzone eines Mischaggregats zur Schmelze des Polymeren zudosiert.

Bevorzugt werden modifizierte Polyarylenethersulfone oder -ketone eingesetzt, die durch Umsetzen von 80 bis 99,9 Gew.-%, insbesondere 90 bis 99 Gew.-% des unmodifizierten Polyarylenethersulfonen oder-ketonen, mit 0,1 bis 20 Gew.-%, insbesondere 1 bis 10 Gew.-% der reaktiven Verbindung erhalten worden sind.

Besonders bevorzugt werden mit 0,1 bis 1,5 Gew.-% Maleinsäureanhydrid gepfropfte Polyarylenethersulfone eingesetzt. Dabei werden Polyarylenethersulfone, enthaltend 5 bis 95 mol% Einheiten I₁ und 5 bis 95 mol% Einheiten I₂ bevorzugt.

Polyarylenethersulfone mit 80 bis 95, vorzugsweise 85 bis 95 mol% Einheiten der Formel I₂ und I₁ und entsprechend 5 bis 20, vorzugsweise 5 bis 15 mol% Einheiten der Formel I₁ bzw. I₂ seien hier insbesondere erwähnt.

Als Radikalstarter können in der Regel die in der Fachliteratur (z. B. J. K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone verwendet. Selbstverständlich können auch Mischungen unterschiedlicher Radikalstarter eingesetzt werden.

Entsprechend modifizierte Polyphenylenether sind u. a. aus der WO 87/00540 bekannt, welche insbesondere in Mischungen mit Polyamid eingesetzt werden können.

Die erfindungsgemäße Mischung enthält im Allgemeinen 75 bis 99,5 Gew.-%, bevorzugt 80 bis 99 Gew.-%, besonders bevorzugt 85 bis 99 Gew.-%, beispielsweise 94 bis 98 Gew.-%, jeweils bezogen auf die gesamte Mischung, wenigstens ein thermoplastisches Polymer als Komponente (A). In einer besonders bevorzugten Ausführungsform ist das wenigstens eine thermoplastische Polymer ein SAN-Polymerisat, insbesondere bevorzugt in Kombination mit wenigstens einem Pfropfcopolymerisat.

### Komponente (B):

In der erfindungsgemäßen Mischung liegt als Komponente (B) wenigstens ein photokatalytisch aktives Teilchen, umfassend einen nicht porösen Kern enthaltend wenigstens ein Metall- oder Halbmetalloxid von Metallen oder Halbmetallen ausgewählt aus der Gruppe bestehend aus V, Ti, Zr, Ce, Mo, W, Bi, Zn, Mn, Si, Ba, Au, Ag, Pd, Pt, Ru, Rh, La und Mischungen davon, mit einem Durchmesser von 0,1 nm bis 1 µm und wenigstens eine den Kern zumindest teilweise umgebende poröse Hülle enthaltend wenigstens ein weiteres Metall- oder Halbmetalloxid ausgewählt aus SiO₂, ZnO, CeO₂, TiO₂, SnO oder SnO₂ oder Mischungen davon, mit einer mittleren Schichtdicke von 0,1 bis 10 nm vor.

Geeignete Metalle oder Halbmetalle, deren Oxide im Kern des als Komponente (B) vorliegenden wenigstens einen photokatalytisch aktiven Teilchens vorliegen, sind ausgewählt aus der Gruppe bestehend aus V, Ti, Zr, Ce, Mo, W, Bi, Zn, Mn, Si, Ba, Au, Ag, Pd, Pt, Ru, Rh, La und Mischungen davon, ganz besonders bevorzugt TiO₂

Ein besonders bevorzugtes Metall- oder Halbmetalloxid, welches im Kern von Komponente (B) vorliegt, ist TiO₂, welches im wesentlichen in der Anatas-Modifikation vorliegt, d.h. bevorzugt zu mehr als 50%, besonders bevorzugt zu mehr als 60% in der Anatas-Modifikation vorliegt.

Metall- oder Halbmetalloxide, die in der wenigstens einen Hülle von Komponente (B) vorliegen, sind SiO₂, ZnO, CeO₂, TiO₂, SnO oder SnO₂ oder Mischungen davon.

In einer bevorzugten Ausführungsform des erfindungsgemäßen Beschichtungsmaterials weist Komponente (B) einen Kern aus TiO₂ und eine Hülle aus SiO₂ auf.

Dass die Hülle den Kern des als Komponente (B) vorliegenden photokatalytisch aktiven Teilchens "zumindest teilweise" umgibt, bedeutet, dass im Allgemeinen mindestens 70%, bevorzugt mindestens 80%, besonders bevorzugt mindestens 90% des Kems von der Hülle umgeben sind.

Die als Komponente (B) in dem erfindungsgemäßen Beschichtungsmaterial vorliegenden photokatalytisch aktiven Teilchen weisen bevorzugt eine enge Teilchengrößenverteilung auf. Im Rahmen der vorliegenden Erfindung bedeutet eine enge Teilchengrößenverteilung, dass bevorzugt ≥ 70%, besonderes bevorzugt ≥ 80%, ganz besonders bevorzugt ≥ 90% der Teilchengrößen in einem Bereich liegen, der höchstens 20 nm, bevorzugt höchstens 15 nm, besonders bevorzugt höchstens 10 nm von der durchschnittlichen Teilchengröße abweicht.

Die Kern-Hülle-Nanopartikel zeichnen sich dadurch aus, dass sie einen nicht porösen Kern und eine poröse Beschichtung aufweisen. Durch die gezielt einstellbare Porosität und Dicke der Beschichtung ist es möglich, die katalytische Aktivität des Kerns gezielt auf die entsprechenden Anforderungen an die erfindungsgemäße Mischung einzustellen. Die Porösität der SiO₂-Schicht wird über XPS (X-ray Photo Electron Spectroscopy - ESCA Electron Spectroscopy for Chemical Analysis) gemessen. So ist es möglich, die Aktivität der Kern-Hülle-Partikel so einzustellen, dass an Bauteilen bzw. Artikeln, die aus der erfindungsgemäßen Mischung hergestellt werden können, anhaftende Verunreinigungen katalytisch abgebaut werden, dass jedoch das in der erfindungsgemäßen Mischung vorliegende wenigstens eine thermoplastische Polymer im Wesentlichen nicht katalytisch abgebaut wird.

Die Photoaktivität gegen Schadstoffe, beispielsweise auf den Bauteilen bzw. Artikeln anhaftende Verunreinigungen, beträgt mehr als 60% der Photoaktivität eines Standardphotokatalysators (Evonik P25), besonders bevorzugt mehr als 70%, ganz besonders bevorzugt mehr als 80%. Die Photoaktivität gegenüber dem als Komponente (A) in dem erfindungsgemäßen Beschichtungsmittel vorliegenden wenigstens einen thermoplastischen Polymer, beträgt bevorzugt weniger als 50% der Photoaktivität eines Standardphotokatalysators (Evonik P25), besonders bevorzugt weniger als 40%, und ganz besonders bevorzugt weniger als 30%.

In einer bevorzugten Ausführungsform ist in der erfindungsgemäßen Mischung Komponente (B) aktiv gegenüber Verunreinigungen und nicht aktiv gegenüber dem wenigstens einen vorliegenden thermoplastischen Material, d. h. den Matrixmaterialien.

Der Kern des als Komponente (B) eingesetzten photokatalytisch aktiven Teilchens hat einen Durchmesser von 0,1 nm bis 1 µm und die Hülle des Teilchens hat eine mittlere Schichtdicke von 0,1 bis 10 nm. In einer bevorzugten Ausführungsform beträgt der Durchmesser des Kerns 1 bis 200 nm, besonders bevorzugt 5 bis 50 nm. In einer weiteren bevorzugten Ausführungsform beträgt die mittlere Schichtdicke der Hülle 0,1 bis 5 nm, besonders bevorzugt 1 bis 3 nm.

Die Porosität der Hülle des erfindungsgemäß als Komponente (B) eingesetzten photokatalytisch aktiven Teilchens kann ausgedrückt werden durch das Verhältnis von Anteil des Metalls in der Hülle, beispielsweise Si, in Atomprozent zu Anteil des Metalls im Kern, beispielsweise Ti, in Atomprozent und beträgt bevorzugt 2 bis 80, besonders bevorzugt 5 bis 60, insbesondere bevorzugt 8 bis 40, jeweils gemessen über XPS (X-Ray Photo Electron Spectroscopy-ESCA Electron Spectroscopy for Chemical Analysis).

Die in der erfindungsgemäßen Mischung als Komponente (B) bevorzugt eingesetzten photokatalytisch aktiven Teilchen können durch alle dem Fachmann bekannten Verfahren hergestellt werden. Beispielhaft sind als geeignete Verfahren zur Herstellung der erfindungsgemäß eingesetzten photokatalytisch aktiven Teilchen die nass-chemischen Sol-Gel-Verfahren und die Flammensynthese-Verfahren, beispielsweise gemäß der noch nicht veröffentlichten Internationalen Anmeldung PCT/EP2008/061221, genannt. Diese Verfahren sind dem Fachmann bekannt.

Die als Komponente (B) einsetzbaren photokatalytisch aktiven Teilchen entwickeln ihre Photoaktivität, wenn sie mit Licht einer geeigneten Wellenlänge angeregt werden. Erfindungsgemäß geeignetes Licht weist eine Wellenlänge von beispielsweise 300 bis 700 nm auf. Licht dieser Wellenlänge kann mit dem Fachmann bekannten Lichtquellen erzeugt werden. In einer bevorzugten Ausführungsform entwickeln die in der erfindungsgemäßen Mischung vorliegenden photokatalytisch aktiven Teilchen ihre Aktivität bei Bestrahlen mit Sonnenlicht.

In einer bevorzugten Ausführungsform kann die erfindungsgemäße Mischung neben den Komponenten (A) und (B) Additive, Hilfsmittel oder weitere Substanzen enthalten, beispielsweise ausgewählt aus der Gruppe bestehend aus Farbstoffen, Wachsen, Stabilisatoren, Entschäumem, Füllstoffen und Mischungen davon. Die optional vorliegenden Additive, Hilfsmittel oder weiteren Substanzen liegen in der erfindungsgemäßen Mischung bevorzugt in einer Menge von 0 bis 15 Gew.%, besonders bevorzugt 0,001 bis 15 Gew.-%, ganz besonders bevorzugt 0,01 bis 15 Gew.-%, vor.

Die erfindungsgemäße Mischung enthält im Allgemeinen 0,5 bis 25 Gew.-%, bevorzugt 1 bis 20 Gew.-%, besonders bevorzugt 1 bis 15 Gew.-%, beispielsweise 2 bis 6 Gew.-%, jeweils bezogen auf die gesamte Mischung, wenigstens ein photokatalytisch aktives Teilchen, umfassend einen nicht-porösen Kern enthaltend wenigstens ein Metall- oder Halbmetalloxid mit einem Durchmesser von 0,1 nm bis 1 µm und wenigstens eine den Kern zumindest teilweise umgebende poröse Hülle enthaltend wenigstens ein weiteres Metall- oder Halbmetalloxid mit einer mittleren Schichtdicke von 0,1 bis 10 nm als Komponente (B).

Somit enthält die erfindungsgemäße Mischung in einer besonders bevorzugten Ausführungsform 75 bis 99,5 Gew.-%, bevorzugt 80 bis 99 Gew.-%, besonders bevorzugt 85 bis 99 Gew.-%, beispielsweise 94 bis 98 Gew.-%, jeweils bezogen auf die gesamte Mischung, wenigstens ein thermoplastisches Polymer als Komponente (A), 0,5 bis 25 Gew.-%, bevorzugt 1 bis 20 Gew.-%, besonders bevorzugt 1 bis 15 Gew.-%, beispielsweise 2 bis 6 Gew.-%, jeweils bezogen auf die gesamte Mischung, wenigstens ein photokatalytisch aktives Teilchen, umfassend einen nicht-porösen Kern enthaltend wenigstens ein Metall- oder Halbmetalloxid mit einem Durchmesser von 0,1 nm bis 1 µm und wenigstens eine den Kern zumindest teilweise umgebende poröse Hülle enthaltend wenigstens ein weiteres Metall- oder Halbmetalloxid mit einer mittleren Schichtdicke von 0,1 bis 10 nm als Komponente (B) und gegebenenfalls Additive, Hilfsmittel oder weitere Substanzen, wobei die Summe der Mengen von Komponente (A) und Komponente (B) und der gegebenenfalls vorliegenden Additive, Hilfsmittel oder weiteren Substanzen 100 Gew.-% ergibt.

Die vorliegende Erfindung betrifft auch ein Verfahren zur Herstellung einer erfindungsgemäßen Mischung durch Vermischen der Komponenten (A) und (B) und gegebenenfalls vorliegender Additive, Hilfsmittel oder weiterer Substanzen. Das Vermischen kann im Allgemeinen nach allen dem Fachmann bekannten Verfahren erfolgen, beispielsweise in einem Extruder.

Das erfindungsgemäße Verfahren wird im Allgemeinen bei Temperaturen durchgeführt, bei denen die als Komponente (A) eingesetzten thermoplastischen Polymere verarbeitbar sind, d. h. bevorzugt im geschmolzenen Zustand vorliegen. Daher ist die Temperatur abhängig von dem thermoplastischen Polymer, welches eingesetzt wird.

In einer bevorzugten Ausführungsform betrifft die vorliegende Erfindung das erfindungsgemäße Verfahren, wobei es bei einer Temperatur von 80 bis 350 °C, besonders bevorzugt 120 bis 300, ganz besonders bevorzugt 180 bis 280 °C, durchgeführt wird.

Aus der erfindungsgemäßen Mischung können Formteile hergestellt werden, die insbesondere für Außenanwendungen geeignet sind, da anhaftende Verunreinigungen durch das Vorliegen der photokatalytisch aktiven Partikel bei Bestrahlung mit z. B. Sonnenlicht abgebaut werden. Gleichzeitig werden die vorliegenden thermoplastischen Polymere aber nicht angegriffen, so dass die Formteile nicht geschädigt werden. Daher betrifft die vorliegende Erfindung auch Formteile, enthaltend eine erfindungsgemäße Mischung. Beispiele für erfindungsgemäße Formteile sind Fassaden, Kühlergrill, Außenspiegelgehäuse, Dachrinnen und -ausstattungen, generell Außenverkleidungen, Autobauteile, Gartenmöbel, Schwimmbecken, Prothetik, Böden, generelle Möbel für Aussenbereiche, Elektrikteile, Kabelrohre, Lampen.

Die vorliegende Erfindung betrifft auch die Verwendung einer erfindungsgemäßen Mischung zur Herstellung von Formteilen. Bezüglich der Mischungen und der Formteile gilt das oben Gesagte.

Bei den oben genannten Formteilen findet die Photokatalyse bevorzugt an oder in der unmittelbaren Nähe der Oberfläche der Formteile statt. Die vorliegende Erfindung betrifft daher auch die Verwendung der erfindungsgemäßen Mischung als photokatalytisch aktive Oberfläche, beispielsweise als Oberfläche der oben genannten Formteile. Bezüglich der Mischungen und der Formteile gilt das oben Gesagte.

### Beispiele:

Nachfolgend werden die zur Charakterisierung der Mischungen eingesetzten Untersuchungsmethoden erläutert:

### Charpy-Kerbschlagzähigkeit (ak) [kJ/m²]:

Die Kerbschlagzähigkeit wird an Probekörpern (80 x 10 x 4 mm, hergestellt nach I-SO 294 in einem Familienwerkzeug, bei einer Massetemperatur von 240 °C und einer Werkzeugtemperatur von 60 °C), bei 23 °C bzw. -30 °C nach ISO 179-2/1 eA (F), ermittelt.

### Charpy-Schlagzähigkeit (an) [kJ/m²]:

Die Kerbschlagzähigkeit wird an Probekörpern (80 x 10 x 4 mm, hergestellt nach I-SO 294 in einem Familienwerkzeug, bei einer Massetemperatur von 240 °C und einer Werkzeugtemperatur von 60 °C), bei 23 °C bzw. -30 °C nach ISO 179-2/1eU ermittelt.

### Elastizität (E-Modul [MPa]):

Die Elastizität wird an Prüfkörpern (hergestellt nach ISO 294 bei einer Massetemperatur von 240 °C und einer Werkzeugtemperatur von 60 °C) nach ISO 527-2/1A/50 geprüft.

### Grundrezept:

### Komponente (A):

65 Gew.-%, bezogen auf die Gesamtmenge der vorliegenden Polymeren, SAN-Copolymer (Poly-styrolacrylnitril), bestehend aus 35 Gew.-% Acrynitril und 65 Gew.-% Styrol.

25 Gew.-%, bezogen auf die Gesamtmenge der vorliegenden Polymeren, eines Pfropfkautschukes I, umfassend 60 Gew.-% eines quervernetzten Polyacrylsäurebutylesters als Pfropfgrundlage b1 mit einer mittleren Teilchengröße von 80 nm, einem Aufquellindex von 14 und einem Gelgehalt von über 94%, und 40 Gew.-% einer Pfropfschale b2 erhältlich durch die Polymerisation von 75 Gew.-% Styrol und 25 Gew.-% Acrylnitril, jeweils bezogen auf die Pfropfschale b2, in Gegenwart der Pfropfgrundlage b1.

10 Gew.-%, bezogen auf die Gesamtmenge der vorliegenden Polymeren, eines Pfropfkautschuks II, umfassend 60 Gew.-% eines quervernetzten Polyacrylsäurebutylesters als Pfropfgrundlage c1 mit einer mittleren Teilchengröße von 465 nm, einem Aufquellindex von 10 und einem Gelgehalt von über 94% und 40 Gew.-% einer Pfropfschale c2 erhältlich durch Polymerisation von 83 Gew.-% Styrol und 17 Gew.-% Acrylonitril, jeweils bezogen auf die Pfropfschale c2, in der Art, dass 13 Teile des Styrols zugegeben werden, bevor das Acrylnitril zugegeben worden ist.

Die Pfropfkautschuke werden mit MgSO₄ koaguliert.

Es werden verschiedene Arten TiO₂ zugesetzt, wobei die eingesetzte Menge bei Komponente (A) abgezogen wird, so dass die Summe der Mengen von Komponente (A) und TiO₂ (entsprechend Komponente (B) in den erfindungsgemäßen Mischungen) 100 Gew.-% ergibt.

**Tabelle 1: Zusammensetzungen der Mischungen**

| **Beispiel** | **Art TiO₂** | **Menge TiO2 [Gew.-%]** | **Menge Komp. (A) [Gew.-%]** |
|---|---|---|---|
| **1** | TiO₂ (nicht photoaktiv) | 5,0 | 94,5 |
| **2** | P25 Evonik (nicht beschichtet) | 2.5 2,5 | 97.0 97,0 |
| **3** | wie Beispiel 2 | 7,5 | 92,0 |
| **4** | Kern: nicht poröses TiO₂, Schale: poröses SiO₂ | 2,5 | 97,0 |
| **5** | wie Beispiel 4 | 5,0 | 94,5 |

| | | | |
|---|---|---|---|
| Beispiele 1, 2 und 3 sind Vergleichsbeispiele, Beispiele 4 und 5 sind erfindungsgemäße Beispiele | | | |

Des Weiteren werden alle Proben mit 0,5 Gew.-% HALS (HALS = Hindered Amine Light Stabilizer) stabilisiert.

### Verarbeitung:

Alle Proben werden auf einem ZSK30-Extruder mit einer 55J Schnecke mit 200 Umdrehungen/Minute bei 250 °C extrudiert. Die Proben plättchen werden bei 270 °C und einer Werkzeugtemperatur von 60 °C spritzgegossen.

### Mechanische Kennwerte:

Die Probenplättchen werden nach den oben beschriebenen Methoden vermessen. Die Ergebnisse sind in Tabelle 2 zusammengefasst.

**Tabelle 2:**

| | **Beispiel 1** | **Beispiel 2** | **Beispiel 3** | **Beispiel 4** | **Beispiel 5** |
|---|---|---|---|---|---|
| **Charpy (ak) (23 °C) [kJ/m²]** | 12,0 | 8,0 | 5,9 | 8,5 | 7,2 |
| **Charpy (ak) (-30 °C) [kJ/m²]** | 2,2 | 1,6 | 1,4 | 1,3 | 1,3 |
| **Charpy (an) (23 °C) [kJ/m²]** | 184,0 | 43,3 | 31,2 | 63,6 | 41,4 |
| **Elongation at break [%]** | 9,9 | 5,7 | 4,97 | 5,7 | 5,5 |

### Photokatalytische Aktivität:

Die proben gemäß den Beispielen 1 bis 5 werden bezüglich ihrer photokatalytischen Aktivität gegenüber Verunreinigungen und gegenüber den thermoplastischen Polymeren untersucht.

Als Modelsubstanz werden wässrige Lösungen von Methylenblau (Konzentrationen von 0,025%, 0,05% und 0,1%) mit einem hohen Extinktions-Koeffizient verwendet. 50 µl von jeder Konzentration werden auf die Oberfläche der einzelnen Proben aufgetragen, und dann für 14 Tage unter simulierten Sonnenschein-Bedingungen ("Suntest") bestrahlt. Die Ergebnisse sind in Tabelle 3 wiedergegeben:

**Tabelle 3: Ergebnisse im "Suntest"**

| **Beispiel** | **0,025% Methylenblau** | **0,05% Methylenblau** | **0,1% Methylenblau** |
|---|---|---|---|
| **1** | keine Aktivität | keine Aktivität | keine Aktivität |
| **2** | teilweise entfernt | teilweise entfernt | teilweise entfernt |
| **3** | vollständig entfernt (nach 1 Woche) | vollständig entfernt (nach 1 Woche) | vollständig entfernt (nach 1 Woche) |
| **4** | vollständig entfernt | vollständig entfernt | teilweise entfernt |
| **5** | vollständig entfernt (nach 1 Woche) | vollständig entfernt (nach 1 Woche) | vollständig entfernt (nach 1 Woche) |

In einem weiteren Test zum Abbau des thermoplastischen Polymers werden die oben beschriebenen Proben für 24 h mit 3 mW/cm² ("Osram Black light blue lamp") bestrahlt. Die Farbänderungen werden danach mit den Augen bewertet. Die Probe gemäß Beispiel 2 zeigt eine leicht dunklere Färbung und die Probe gemäß Beispiel 3 zeigt eine signifikant dunklere Färbung als die anderen Proben, was in beiden Fällen auf einen stärkeren photokatalytischen Abbau in diesen Proben als in den anderen Proben hinweist. Die Proben gemäß Beispiel 4 und 5 zeigen keine signifikante Farbänderung im Vergleich zur Probe gemäß Beispiel 1 nach der Bestrahlung.

### Wetterbeständigkeit:

Die Proben werden mittels einer Xenotest-Maschine gemäß DIN 4892-2A bestrahlt und mit der dem Fachmann bekannten, für Anwendungen im Außenbereich typischen D8-Methode (PLASTverarbeiter; 35. Jahrgang; 1984; Nr. 5; S. 36-40) analysiert. Die Ergebnisse werden in Tabelle 4 dargestellt.

**Tabelle 4:**

| **Beispiel** | **D8-Wert nach 0 h** | **D8-Wert nach 300 h** | **D8-Wert nach 700 h** | **D8-Wert nach 1000 h** | **D8-Wert nach 1500 h** |
|---|---|---|---|---|---|
| **1** | 0 | -3,55 | -3,74 | -3,74 | -3 |
| **2** | 0 | -10,01 | -9,37 | -9,5 | -9,62 |
| **3** | 0 | -5,84 | -9,06 | -7,87 | -8,03 |
| **4** | 0 | -6,65 | -6,06 | -6,3 | -6,34 |
| **5** | 0 | -3,35 | -4,16 | -4,36 | -4,47 |

Die Probe gemäß Beispiel 1 zeigt die geringsten D8-Werte. Die Proben gemäß den Beispielen 2 und 3 zeigen signifikante Farbänderungen. Die Proben gemäß den erfindungsgemäßen Beispielen 4 und 5 zeigen moderate Farbänderungen. Die Probe gemäß Beispiel 5 zeigt in etwa die gleichen Werte wie die Probe gemäß Beispiel 1, die kein photoaktives TiO₂ enthält.

## Patentansprüche

1. Mischung, enthaltend
(A) wenigstens ein thermoplastisches Polymer als Komponente (A) und
(B) wenigstens ein photokatalytisch aktives Teilchen, umfassend einen nicht porösen Kern enthaltend wenigstens ein Metall- oder Halbmetalloxid von Metallen oder Halbmetallen ausgewählt aus der Gruppe bestehend aus V, Ti, Zr, Ce, Mo, W, Bi, Zn, Mn, Si, Ba, Au, Ag, Pd, Pt, Ru, Rh, La und Mischungen davon, mit einem Durchmesser von 0,1 nm bis 1 µm und wenigstens eine den Kern zumindest teilweise umgebende poröse Hülle enthaltend wenigstens ein weiteres Metall- oder Halbmetalloxid ausgewählt aus SiO₂, ZnO, CeO₂, TiO₂, SnO oder SnO₂ oder Mischungen davon, mit einer mittleren Schichtdicke von 0,1 bis 10 nm als Komponente (B), wobei das Verhältnis des Metalls oder Halbmetalls in der Hülle in Atomprozent zu Anteil des Metalls oder Halbmetalls im Kern, im Atomprozent 2 bis 80 beträgt, und Komponente (A) ausgewählt ist aus der Gruppe bestehend aus Polyoxymethylenhomo- oder -copolymerisaten, Polycarbonaten, Polyestem, Polyolefinen, Poly(meth)acrylaten, Polyamiden, vinylaromatischen Polymeren, Polyarylenethem und Mischungen davon.

2. Mischung nach Anspruch 1, **dadurch gekennzeichnet, dass** Komponente (B) einen Kern aus TiO₂ und eine Hülle aus SiO₂ aufweist.

3. Mischung nach Anspruch 2, **dadurch gekennzeichnet, dass** das TiO₂ im Wesentlichen in der Anatas-Modifikation vorliegt.

4. Mischung nach einem der Ansprüche 1 bis 3, **dadurch gekennzeichnet, dass** sie neben den Komponenten (A) und (B) Additive, Hilfsmittel oder weitere Substanzen enthält.

5. Mischung nach einem der Ansprüche 1 bis 4, **dadurch gekennzeichnet, dass** sie 75 bis 99,5 Gew.-% wenigstens ein thermoplastisches Polymer als Komponente (A), 0,5 bis 25 Gew.-%, jeweils bezogen auf die gesamte Mischung, wenigstens ein photokatalytisch aktives Teilchen, umfassend einen nicht-porösen Kern enthaltend wenigstens ein Metall- oder Halbmetalloxid mit einem Durchmesser von 0,1 nm bis 1 µm und wenigstens eine den Kern zumindest teilweise umgebende poröse Hülle enthaltend wenigstens ein weiteres Metall- oder Halbmetalloxid mit einer mittleren Schichtdicke von 0,1 bis 10 nm als Komponente (B) und gegebenenfalls Additive, Hilfsmittel oder weitere Substanzen enthält, wobei die Summe der Mengen von Komponente (A) und Komponente (B) und der gegebenenfalls vorliegenden Additive, Hilfsmittel oder weiteren Substanzen 100 Gew.-% ergibt.

6. Verfahren zur Herstellung einer Mischung nach einem der Ansprüche 1 bis 5, durch Vermischen der Komponenten (A) und (B) und gegebenenfalls vorliegenden Additiven, Hilfsmitteln oder weiteren Substanzen.

7. Verfahren nach Anspruch 6, **dadurch gekennzeichnet, dass** es bei einer Temperatur von 80 bis 350 °C durchgeführt wird.

8. Verwendung der Mischung nach einem der Ansprüche 1 bis 5 als photokatalytisch aktive Oberfläche.

9. Formteil, enthaltend eine Mischung nach einem der Ansprüche 1 bis 5.

10. Verwendung einer Mischung nach einem der Ansprüche 1 bis 5 zur Herstellung von Formteilen.

## Claims

1. A mixture, comprising
(A) at least one thermoplastic polymer as component (A), and
(B) at least one photocatalytically active particle, comprising a non-porous core comprising at least one metal- or semimetal oxide of metals or semimetals selected from the group consisting of V, Ti, Zr, Ce, Mo, W, Bi, Zn, Mn, Si, Ba, Au, Ag, Pd, Pt, Ru, Rh, La and mixtures thereof, with a diameter of from 0.1 nm to 1 µm, and, at least to some extent surrounding the core, at least one porous outer layer comprising at least one further metal- or semimetal oxide selected from SiO₂, ZnO, CeO₂, TiO₂, SnO or SnO₂ or mixtures thereof, with an average layer thickness of from 0.1 to 10 nm, as component (B), wherein the ratio of metal or semimetal in the outer layer in atomic percent to ratio of metal or semimetal in the core, in atomic percent, is 2 to 80, and component (A) is selected from the group consisting of polyoxymethylene homo- or copolymers, polycarbonates, polyesters, polyolefins, poly(meth)acrylates, polyamides, vinylaromatic polymers, polyarylene ethers, and mixtures thereof.

2. The mixture according to claim 1, wherein component (B) comprises a core of TiO₂ and an outer layer of SiO₂.

3. The mixture according to claim 2, wherein the TiO₂ is in essence present in the anatase-form.

4. The mixture according to any of claims 1 to 3, which comprises, along components (A) and (B), additives, auxiliaries, or further substances.

5. The mixture according to any of claims 1 to 4, wherein it comprises from 75 to 99.5% by weight of at least one thermoplastic polymer as component (A), from 0.5 to 25% by weight, based in each case on the entire mixture, of at least one photocatalytically active particle, comprising a non-porous core comprising at least one metal- or semimetal oxide with a diameter of 0.1 nm to 1 µm, and, at least to some extent surrounding the core, at least one porous outer layer comprising at least one further metal- or semimetal oxide with an average layer thickness of from 0.1 to 10 nm, as component (B), and, if appropriate, additives, auxiliaries, or further substances, where the total of the amounts of component (A) and component (B), and of any additives, auxiliaries, or further substances present is 100% by weight.

6. A process for the preparation of a mixture according to any of claims 1 to 5, via mixing of components (A) and (B) and of any additives, auxiliaries, or further substances present.

7. The process according to claim 6, which is carried out at a temperature of from 80 to 350°C.

8. The use of the mixture according to any of claims 1 to 5 as photocatalytically active surface.

9. A molding, comprising a mixture according to any of claims 1 to 5.

10. The use of a mixture according to any of claims 1 to 5 for the preparation of moldings.

## Revendications

1. Mélange, contenant
(A) en tant que composant (A), au moins un polymère thermoplastique, et
(B) en tant que composant (B), au moins une particule photocatalytiquement active, comprenant un noyau non poreux, contenant au moins un oxyde d'un métal ou d'un métalloïde, de métaux ou de métalloïdes choisis dans le groupe consistant en V, Ti, Zr, Ce, Mo, W, Bi, Zn, Mn, Si, Ba, Au, Ag, Pd, Pt, Ru, Rh, La et leurs mélanges et présentant un diamètre compris entre 0,1 nm et 1 µm, et comprenant au moins une gaine poreuse, entourant au moins partiellement le noyau, contenant au moins un autre oxyde d'un métal ou d'un métalloïde choisi parmi SiO₂, ZnO, CeO₂, TiO₂, SnO ou SnO₂ ou leurs mélanges et présentant une de couche dont l'épaisseur moyenne est comprise entre 0,1 et 10 nm,
dans lequel les proportions de métal ou métalloïde dans la gaine par rapport à la quantité de métal ou de métalloïde dans le noyau, en pourcentage atomique, est compris entre 2 et 80, et dans lequel le composant (A) est choisi dans le groupe consistant en les homo- et copolymères de polyoxyméthylène, les polycarbamates, les polyesters, les polyoléfines, les poly(méth)acrylates, les polyamides, les polymères vinylaromatiques, les poly(arylène-éthers) et leurs mélanges.

2. Mélange selon la revendication 1, **caractérisé en ce que** le composant (B) comprend un noyau formé de TiO₂ et une gaine formée de SiO₂.

3. Mélange selon la revendication 2, **caractérisé en ce que** TiO₂ est présent pour l'essentiel sous la forme d'anatase.

4. Mélange selon l'une des revendications 1 à 3, **caractérisé en ce que**, outre les composants (A) et (B), il contient des additifs, des adjuvants ouautres substances.

5. Mélange selon l'une des revendications 1 à 4, **caractérisé en ce qu'**il contient, ces proportions étant exprimées par rapport à l'ensemble du mélange,
- en tant que composant (A): de 75 à 99,5 % en poids d'au moins un polymère thermoplastique,
- en tant que composant (B): 0,5 à 25 % en poids, d'au moins une particule photocatalytiquement active comprenant un noyau non poreux contenant au moins un oxyde d'un métal ou d'un métalloïde et présentant un diamètre compris entre 0,1 nm et 1 µm, et comprenant au moins une gaine poreuse entourant au moins partiellement le noyau, contenant au moins un autre oxyde d'un métal ou d'un métalloïde et présentant couche dont l'épaisseur moyenne est comprise entre 0,1 et 10 nm, et éventuellement des additifs, des adjuvants ou d'autres substances, la somme des quantités du composant (A) et du composant (B) et des additifs, adjuvants ou autres substances éventuellement présents, formant 100 % en poids.

6. Procédé de fabrication d'un mélange selon l'une des revendications 1 à 5, par mélange des composants (A) et (B) et éventuellement d'additifs, adjuvants ou autres substances.

7. Procédé selon la revendication 6, **caractérisé en ce qu'**il est mis en oeuvre à une température de 80 à 350°C.

8. Utilisation du mélange selon l'une des revendications 1 à 5 en tant que surface photocatalytiquement active.

9. Pièce façonnée contenant un mélange selon l'une des revendications 1 à 5.

10. Utilisation d'un mélange selon l'une des revendications 1 à 5 pour la fabrication de pièces façonnées.
